# EUROPÄISCHE PATENTANMELDUNG

(11) **EP 0 603 844 A1**
(43) Veröffentlichungstag der Anmeldung: **29.06.1994**
(21) Anmeldenummer: 93120656.9
(22) Anmeldetag: 22.12.1993
(51) Int. Cl.: H01J 41/18, F04D 33/00

(54) **Mikrominiaturisierte, elekrostatische Pumpe und Verfahren zu deren Herstellung**

(30) Priorität: 23.12.1992 DE 4243860
(71) Anmelder: INSTITUT FÜR MIKROTECHNIK MAINZ GmbH, D-55129 Mainz-Hechtsheim (DE)
(72) Erfinder: Ehrfeld, Wolfgang, Prof.Dr., D-55116 Mainz (DE); Lehr, Heinz, Dr., D-10787 Berlin (DE); Schmidt, Martin, Dr., D-14193 Berlin (DE)
(74) Vertreter: Fuchs, Luderschmidt & Partner Patentanwälte

(57) **Zusammenfassung**

Es wird eine mikrominiaturisierte elektrostatische Pumpe beschrieben, die eine verbesserte Pumpleistung aufweist, präziser bei gleichzeitig geringem Abstand der Elektroden gefertigt und sich durch einen geringen Montageaufwand auszeichnet. Die Elektroden (2) bestehen aus mindestens zwei in Strömungsrichtung hintereinander angeordneter, mit unterschiedlichem Potential beaufschlagter Reihen (3-8) von Stäben, die senkrecht zur Strömungsrichtung ausgerichtet sind und auf einem elektrische Leiterbahnen aufweisenden Wandteil gemeinsam aufgebracht sind. Gemäß einer anderen Ausführungsform bilden die Elektroden (2a-h) einen integralen Bestandteil einer ebenen Pumpenwand und sind als in den Pumpenraum (41) hineinragende, sich senkrecht zur Strömungsrichtung erstreckende, rippenförmige Vorsprünge (2a-h) ausgebildet. Die Mikrostruktur der Pumpe wird hinsichtlich Gestalt und gegenseitiger Anordnung der Elektroden unter Einsatz der Röntgentiefenlithographie hergestellt.

## Beschreibung

Die Erfindung betrifft eine mikrominiaturisierte, elektrostatische Pumpe mit in einem zu pumpenden, im wesentlichen nicht leitenden Medium angeordneter Elektroden, die mit einem Potential zum Beschleunigen oder Induzieren und Beschleunigen eines zwischen den Elektroden durch das Medium fließenden Ionenstroms beaufschlagbar sind. Die Erfindung betrifft auch ein Verfahren zur Herstellung derartiger elektrostatischer Pumpen.

Das Anwendungsgebiet solcher elektrostatischer mikrominiaturisierter Pumpen betrifft den Transport von Flüssigkeiten in der Chemie, Biologie und Medizin. Zwischen den Elektroden wird ein elektrostatisches Feld aufgebaut, das für das Induzieren von Ionen und für die Beschleunigung von Ionen benötigt wird. Die Pumpwirkung erfolgt mittels Impulsübertrag der beschleunigten Ionen auf Teilchen des zu pumpenden Mediums. Durch die Integration mit anderen Mikrosystemkomponenten in ein Netzwerk lassen sich darüber hinaus vielfältige Einsatzmöglichkeiten in der automatisierten Analyse verwirklichen, z.B. präzise Dosierungen geringer Mengen von Indikatorlösungen in der Medizintechnik.

Das Prinzip der elektrostatischen Pumpe, die abgesehen von Ventilen ohne bewegte Komponenten auskommt, ist beispielsweise aus US 4,634,057, US 4,463,798, US 3,267,895 und DE-PS 3 925 749 bekannt.

Aus der US-PS 3,398,685 ist eine elektrostatische Pumpe bekannt, die jedoch keine Mikropumpe darstellt. Die Elektroden sind in einem den Pumpenraum bildenden Rohr untergebracht und bestehen im wesentlichen aus sich in Strömungsrichtung verjüngenden Glasrohrstücken, die mit Gold oder Nickel als metallische Beschichtung versehen sind. Diese metallische Beschichtung steht in Kontakt mit einer das Glasrohrstück tragenden zusätzlichen Metallhülse, die an der Innenwand des rohrförmigen Pumpenraums befestigt ist. Sowohl die Gestalt und Anordnung der Elektroden als auch die verwendeten Materialien erlauben keine Miniaturisierung der elektrostatischen Pumpe. Die Form der Elektroden führt in Strömungsrichtung hinter den Elektroden zu einer ungünstigen Wirbelbildung, die die Pumpleistung beeinträchtigt.

Aus der DE-PS 3 925 749 ist eine mikrominiaturisierte elektrostatische Pumpe bekannt, die mit in der Mikroelektronik geläufigen Verfahren aus Halbleitermaterialien, vorzugsweise Silizium, hergestellt ist. Diese Pumpe weist zwei senkrecht zur Richtung der Pumpströmung angeordnete flächenhafte Gitterelektrodenstrukturen auf, die durch eine Oberflächenmetallisierung elektrisch leitend gemacht worden sind und zur Erzeugung des elektrostatischen Feldes mit entsprechenden Spannungen beaufschlagt sind. Die Elektroden können auch stegförmig ausgebildet sein, wobei eine oder beide Elektroden zur Erhöhung des elektrischen Feldgradienten dreieckig oder trapezförmig ausgeführt sind. Die Elektrodenform und die Größe des elektrischen Feldgradienten begünstigt dabei die Ionenbildung. Die Möglichkeiten der Formgebung sind jedoch durch die Kristallstruktur des Halbleiters, der Bearbeitungsverfahren aus der Mikroelektronik und der Notwendigkeit der Endmontage der Pumpenhälften begrenzt.

Aus der US-PS 3,554,669 ist eine Pumpe bekannt, bei der die Elektroden flache, keilförmige Gebilde sind, die in Strömungsrichtung ausgerichtet sind und als Vorsprünge bezeichnet werden. Der Pumpkammerquerschnitt ist durch die äußerst geringe Bauhöhe der Elektroden sehr gering, so daß auch die Pumpleistung entsprechend niedrig ist. Auf dem Wandteil sind Emitter und Receiver befestigt, die integral die als Vorsprünge ausgebildeten Elektroden aufweisen. Zwischen diesen Bauteilen sind Spacer vorgesehen, die ebenfalls am Wandteil befestigt werden müssen. Leiterbahnen, auf denen die Elektroden angebracht werden, sind nicht vorhanden, da die Emitter und Receiver aus elektrisch leitendem Material gefertigt sind.

Der Nachteil bei dieser bekannten Pumpe besteht darin, daß die Anordnung und Zuordnung der Elektroden erst bei der Montage erfolgen kann, was einen entsprechend großen Aufwand erfordert und nicht die gewünschte Genauigkeit gewährleistet.

Aufgabe der Erfindung ist eine mikrominiaturisierte elektrostatische Pumpe, die eine verbesserte Pumpleistung aufweist, präziser bei gleichzeitig geringerem Abstand der Elektroden gefertigt ist und sich durch einen geringen Montageaufwand auszeichnet. Es ist auch Aufgabe der Erfindung ein Verfahren bereitzustellen, mit dem die Pumpe mit größerer Präzision gefertigt werden kann, wobei gleichzeitig eine Massenfertigung sowie die Integration in ein komplexes Mikrosystem möglich sein soll.

Diese Aufgabe wird mit einer mikrominiaturisierten elektrostatischen Pumpe gemäß Anspruch 1 und Anspruch 5 sowie mit einem Verfahren gemäß Anspruch 10 gelöst.

Die erfindungsgemäße Pumpe ist in zwei Ausführungsformen realisiert, denen gemeinsam ist, daß zumindest ein Teil der Elektroden zusammen ausgebildet wird, so daß beim Herstellungsvorgang bereits die gegenseitige Anordnung und Zuordnung festliegt.

Gemäß einer ersten Ausführungsform bestehen die Elektroden aus mindestens zwei in Strömungsrichtung hintereinander angeordneter mit unterschiedlichem Potential beaufschlagter Reihen von Stäben, die senkrecht zur Strömungsrichtung und senkrecht zu einem Wandteil ausgerichtet sind. Die Elektroden, die gemeinsam gefertigt werden, sind gemeinsam auf einem elektrische Leiterbahnen aufweisenden Wandteil der Pumpe aufgebracht. Zur Herstellung der Pumpe gibt es verschiedene Verfahrensvarianten, die nachfolgend noch beschrieben werden.

Jeweils zwei gegenüberliegende Stabreihen, die mit unterschiedlichem elektrischen Potential beaufschlagt sind, bilden eine Pumpeinheit. Durch den Potentialunterschied der Stabreihen werden in dem zu pumpenden Medium befindliche Ionen beschleunigt.

Die Stärke der Pumpwirkung hängt u.a. von der Anzahl der Pumpzellen, von der Höhe der angelegten Spannung, vom Abstand der Elektroden und von deren Querschnittsform und ihrer Länge ab. Durch die Ausbildung der Elektroden in Form von Stäben läßt sich die Pumpwirkung gezielter einstellen als beim Stand der Technik, weil der Abstand der Stäbe durch das gemeinsame Fertigen der Elektroden bereits beim Herstellungsvorgang festgelegt werden kann und somit beliebig dicht und präzise bei gleichzeitig großer Länge der Stäbe gewählt werden kann.

Der Abstand der Stäbe beträgt vorzugsweise <25 µm, wobei außerdem der Abstand zweier Stabreihen ebenfalls <25 µm gewählt werden kann. Der Abstand der Stäbe wird je nach Viskosität des zu pumpenden Mediums eingestellt und kann auch bis zu wenigen µm betragen, wobei der Abstand der Stabreihen unter Berücksichtigung der Leitfähigkeit des zu pumpenden Mediums in der gleichen Größenordnung liegen kann. In bevorzugter Ausführung kann das Verhältnis von Länge zu Querschnittsabmessung der Stäbe (Aspektverhältnis) >50 betragen. Es sind auch je nach Anwendungszweck Aspektverhältnisse von <50 möglich. Die Querschnittsabmessungen der Stäbe betragen vorzugsweise <25 µm. Diese Variabilität hinsichtlich der Ausgestaltung der Elektroden kann bei Pumpen gemäß dem Stand der Technik aufgrund der Kristallstruktur des Halbleitermaterials und der Bearbeitungsverfahren nicht erzielt werden.

Die Ausbildung der Elektroden in Gestalt von Stabreihen läßt weiterhin eine beliebige Kaskadierung zu, so daß auch niedrig viskose Flüssigkeiten aufgrund der gesteigerten Pumpwirkung gefördert werden können.

Vorzugsweise sind die Querschnitte der Stäbe an die Strömungsverhältnisse in der Pumpe angepaßt. Hierzu eignen sich besonders tropfenförmige Querschnitte, wobei die Schneiden ausschließlich an den mit positivem Potential belegten Stabreihen angebracht sind und in Richtung der mit negativem Potential beaufschlagten, mit abgerundeten Flächen versehenen Gegenelektroden weisen. Die Querschnittsfläche kann auch mehrere Schneiden aufweisen, die in die gleiche Richtung zeigen. Der Querschnitt der Gegenelektrode weist vorzugsweise keine scharfkantigen Formen auf, um möglichst im Nahfeld homogene elektrische Felder zu schaffen. So können, um auch hinsichtlich der Strömungseigenschaften günstige Verhältnisse zu schaffen, die Querschnitte eine der Ellipsenform ähnliche Formen aufweisen.

Gemäß einer zweiten Ausführungsform bilden die Elektroden einen integralen Bestandteil einer ebenen Pumpenwand und sind als in den Pumpenraum hineinragende, sich entlang der Pumpenwand senkrecht zur Strömungsrichtung erstreckende, rippenförmige Vorsprünge ausgebildet. Bei dieser Ausführungsform werden die Elektroden zusammen mit der Pumpenwand gemeinsam hergestellt, so daß auch in diesem Fall die gegenseitige Anordnung und Zuordnung der Elektroden (Wandelektroden) bereits bei der Herstellung festgelegt ist. Auch bei dieser Ausführungsform entfällt eine Montage der einzelnen Elektroden, so daß hierbei auftretende Ungenauigkeiten hinsichtlich der Abstände der Elektroden nicht auftreten können. Dadurch, daß die Elektroden zusammen mit einem Wandteil gefertigt werden, müssen lediglich noch die Wandteile montiert werden. Aufgrund der vereinfachten Montage können die Herstellungskosten somit gering gehalten werden. Die Pumpe kann aus identischen Wandteilen gefertigt sein, so daß gemäß einer bevorzugten Ausführungsform vier Wandteile zu einer rohrförmigen Pumpenkammer zusammengesetzt werden können. Hierbei können alle Wände mit Elektroden versehen sein.

Hinsichtlich der Ausgestaltung der Elektrodenform hat es sich als für die Pumpwirkung vorteilhaft herausgestellt, wenn sich die rippenförmigen Vorsprünge über die gesamte Wandbreite erstrecken.

Die in Strömungsrichtung hintereinander angeordneten rippenförmigen Vorsprünge können mit unterschiedlichem Potential beaufschlagt werden. Diese Ausführungsform ist vorzugsweise dann zu wählen, wenn die übrigen Wandteile der Pumpe nicht mit Elektroden versehen sind. Die Pumpenwirkung wird durch die an den Seitenwänden entlang beschleunigten Ionen erzeugt.

Es besteht aber auch die Möglichkeit, jeweils zwei gegenüberliegende Wände der Pumpe mit rippenförmigen Vorsprüngen zu versehen, wobei jede Wand mit alternierend beaufschlagten Wandelektroden versehen ist oder die Elektroden gegenüberliegender Wandteile mit unterschiedlichem Potential beaufschlagt werden, so daß jeweils zwei gegenüberliegende Wandelektroden das gewünschte elektrische Feld aufbauen. Im letzten Fall sind vorzugsweise die rippenförmigen Vorsprünge der einen Pumpenwand versetzt zu den rippenförmigen Vorsprüngen der anderen Pumpenwand angeordnet. Die Pumpenwirkung hängt hierbei u.a. von der Distanz der Wände ab und wird durch die Längskomponente der schräg zum Querschnitt der Pumpenkammer beschleunigten Ionen erzeugt.

Der Abstand der Wandelektroden kann ebenfalls bis auf wenige µm gewählt werden. Auch bei dieser Ausführungsform mit Wandelektroden ist eine beliebige Kaskadierung möglich.

Die rippenförmigen Vorsprünge sind derart ausgestaltet, daß sie dem zu pumpenden Medium einen möglichst geringen Widerstand entgegensetzen. Vorteilhaft sind leicht in die Ringkammer hineinragende flügelförmige Vorsprünge, die möglichst kontinuierlich in die Pumpenwand übergehen. Diese flügelförmigen Vorsprünge weisen stromabwärts eine Hinterschneidung auf, so daß eine Flügelspitze ausgebildet werden kann, die im wesentlichen auf die stromabwärts benachbarte Elektrode ausgerichtet ist, mit der die flügelförmig ausgebildete Elektrode zur Ausbildung des elektrischen Feldes zusammenwirkt. Die flügelförmigen Elektroden werden im allgemeinen mit positivem Potential beaufschlagt. Die Kombination von flügelförmigen Elektroden mit stark abgerundeten, vorzugsweise mit negativem Potential beaufschlagter, Überhöhungen oder im Querschnitt halbkreisförmigen Wandelektroden, hat sich hinsichtlich der Pumpleistungen als vorteilhaft herausgestellt. Auch die als abgerundete Überhöhung ausgebildeten rippenförmigen Vorsprünge sind derart geformt, daß sie auf den korrespondierenden flügelförmigen Vorsprung weisen.

Die Elektroden können aus elektrisch leitfähigen Polymeren bestehen. Als solche Materialien kommen insbesondere spritzgußfähige Thermoplaste mit beigemischten Metallanteilen oder Kohlenstoffeinlagerungen in Frage. Falls die Elektroden nicht aus elektrisch leitfähigem Material gefertigt sind, sind zumindest diese mit einer leitfähigen Beschichtung versehen.

Die mikrominiaturisierte elektrostatische Pumpe kann auch ein integraler Bestandteil eines Mikrofluidiksystems sein. Ein solches Mikrofluidiksystem kann z.B. eine minaturisierte Mischeinrichtung sein, die eine oder mehrere der erfindungsgemäßen Pumpen aufweist.

Das Verfahren zur Herstellung solcher mikrominiaturisierter elektrostatischer Pumpen erfolgt unter Einsatz der Röntgentiefenlithographie, mit der zumindest die Mikrostruktur hinsichtlich Gestalt und gegenseitiger Anordnung der Elektroden ausgebildet wird. Größe und Abstand der Elektroden wird somit über die bei der Röntgentiefenlithographie verwendeten Masken festgelegt, die mit weitaus größerer Präzision gefertigt werden können als eine Montage einzelner Elektroden möglich ist.

Die Strukturübertragung mittels Röntgentiefenlithographie bietet den Vorteil, daß unterschiedliche Materialien und bisher auch nicht für elektrostatische Pumpen einsetzbare Materialien, wie insbesondere leitende Polymere, verwendet werden können. Auch die Kombination mehrerer Materialien für die Ausbildung der Elektroden und Pumpenwände bzw. weiterer Strukturen im Rahmen eines Mikrofluidiksystems sind möglich.

Die Röntgentiefenlithographie ermöglicht die Ausbildung beliebiger Querschnittsformen, so daß es keine Einschränkungen bei der Ausgestaltung der Elektroden gibt, wie dies bei der Verwendung von Halbleitermaterialien aufgrund der Kristallstruktur der Fall ist. Auch lassen sich ausgedehnte Strukturen bei minimalem Abstand der Komponenten ausbilden, so daß Stäbe oder Rippen mit großer Längenerstreckung bei geringem Abstand zueinander hergestellt werden können. Dadurch kann die Pumpleistung erheblich gesteigert werden oder bei gleicher Pumpleistung kann die Spannung minimiert werden.

Das erfindungsgemäße Verfahren bietet eine erweiterte Vielfalt der Elektrodenauslegung, der Materialauswahl und der Integrationsfähigkeit der Mikrosystemtechnik. Es ist eine jeweils problemangepaßte Ausführung der Elektroden möglich, wodurch eine wesentliche Ausdehnung der Anwendungs- und Einsatzmöglichkeiten, eine fast beliebig durchführare Miniaturisierung mit höchster Präzision und ein außerordentlich hoher Kombinationsgrad mit anderen Mikroelementen der Fluidtechnik möglich sind, so daß hieraus ganze Netzwerksysteme aufbaubar sind.

Gemäß einer ersten Ausführungsform wird zunächst mittels der Röntgentiefenlitographie und der Galvanoformung ein Formwerkzeug hergestellt, das zumindest die Mikrostruktur der Elektroden und die Struktur der zu den Elektroden führenden Leiterbahnen aufweist. Das Formwerkzeug wird nach seiner Herstellung auf eine Wandplatte aufgesetzt und mit einem leitfähigen Material abgeformt. Dieses Verfahren eignet sich insbesondere für die Herstellung von Wandteilen mit stabförmigen Elektroden.

Gemäß einer weiteren Ausführungsform wird zunächst mittels Röntgentiefenlithographie und Galvanoformung ein Formwerkzeug hergestellt, das nicht nur die Mikrostruktur der Elektroden und die Struktur der zu den Elektroden führenden Leiterbahn sondern auch die Wandplatte der Pumpe aufweist. Nach der Herstellung des Formwerkzeuges wird dieses mit einem nichtleitenden Material abgeformt und anschließend die Elektroden und die Leiterbahnen mit einer elektrisch leitenden Schicht versehen. Dieses Verfahren eignet sich sowohl zur Herstellung von Wänden mit stabförmigen Elektroden als auch solcher Wände, in die die Elektroden als rippenförmige Vorsprünge integriert sind.

Der Einsatz der Röntgentiefenlithographie und der Galvanoformung bietet weiterhin den Vorteil, daß die Genauigkeit der Elektroden und deren Abstand zueinander bei der Ausbildung des Formwerkzeuges festgelegt werden kann und dies nicht erst bei der Montage und Justierung der Elektroden auf dem Substrat oder Wandteil erfolgen muß. Damit wird insgesamt eine höhere Genauigkeit erreicht.

Die Verwendung eines Formeinsatzes ermöglicht eine Massenfertigung mit höchster Präzision, da der Formeinsatz für die Herstellung mehrerer miniaturisierter elektrostatischer Pumpen verwendet werden kann. Man erhält somit eine Vielzahl von Pumpen mit gleicher Genauigkeit.

Das Formwerkzeug wird in der Weise hergestellt, daß eine Grundplatte mit röntgenempfindlichem Resistmaterial in aufeinanderfolgenden Schritten in festgelegten Dicken D1, D2, D3 beschichtet wird und daß nach jedem Beschichtungsvorgang das jeweils aufgebrachte Resistmaterial selektiv mit Röntgenstrahlen bestrahlt, entwickelt und galvanisiert wird. Bei der Herstellung einer Wandplatte mit Stabelektroden werden auf diese Weise mittels drei aufeinanderfolgender Schritte die Stabstruktur, die Leiterbahnenstruktur und die Gestalt der Wandplatte hergestellt. Dieses Verfahren wird als Mehrfachbeschichtungsverfahren bezeichnet, wobei die Justierung mittels eines optischen Überdeckungssystems erfolgt. Nach dem Galvanisieren empfiehlt es sich, die jeweils freie Oberfläche auf die festgelegte Dicke D1, D2, D3 abzufräsen.

Zur Herstellung des Formwerkzeuges ist es auch möglich, mehrere Metallplatten mittels der Röntgentiefenlithographie herzustellen, wobei jede Platte eine Struktur der Mikropumpe darstellt und anschließend diese Metallplatten paßgenau miteinander verbunden werden.

Nach dem Abformen des Formwerkzeuges mittels eines nichtleitfähigen Materials wird das Wandteil, das nicht mit einer elektrisch leitenden Schicht versehen werden soll, mit einem lichtempfindlichen Lack bedeckt und dieser Lack entsprechend der Leiterbahnanordnung in einem fotolithographischen Zwischenschritt strukturiert. Anschließend wird die mit der elektrisch leitenden Schicht zu versehende freie Oberfläche mit einer Säure vorbehandelt und danach mit einer elektrisch leitenden Schicht versehen. Vorzugsweise werden nach der Strukturierung des Lacks im Tauchverfahren Palladiumkerne aufgebracht und erst dann das Metall für die elektrisch leitende Schicht galvanisch abgeschieden. Die freie Oberfläche kann auch mittels einer Plasmabehandlung metallisiert werden.

Eine andere Verfahrensvariante besteht darin, daß nach dem Abformen des Formwerkzeuges mit nicht leitfähigem Material die gesamte freie Oberfläche mit einer elektrisch leitenden Schicht versehen wird und daß anschließend die Leiterbahnen duch Ablation und/oder Erhitzung mit einem Laser- oder Ionenstrahl getrennt werden.

Gemäß einer weiteren Verfahrensvariante wird nach dem Abformen des Formwerkzeuges die gesamte freie Oberfläche mit einer elektrisch leitenden Schicht versehen, diese Schicht mit einem lichtempfindlichem Lack bedeckt und die zu entfernenden Flächen belichtet, entwickelt und abgetragen. Die so freigelegte leitende Schicht wird danach abgeätzt und anschließend wird der restliche Lack entfernt, so daß die übriggebliebenden, mit der leitenden Schicht bedeckten Flächen freigelegt werden.

Gemäß einer weiteren Ausführungsform wird von einer mit Leiterbahnen versehenen Wandplatte ausgegangen und ein leitfähiges, röntgenempfindliches Resistmaterial auf diese Wandplatte aufgebracht und mittels der Röntgentiefenlithographie zumindest die Elektrodenstruktur aus dem Resistmaterial herausgearbeitet.

Anstelle eines leitfähigen röntgenempfindlichen Resistmaterials kann auch ein nicht leitfähiges röntgenempfindliches Resistmaterial auf die mit Leiterbahnen versehene Wandplatte aufgebracht werden. Mittels der Röntgentiefenlithographie wird zumindest die Elektrodenstruktur aus dem Resistmaterial herausgearbeitet und anschließend die die Elektroden bildenden Freiräume mit elektrisch leitendem Material ausgefüllt.

Gemäß einer weiteren Ausführungsform wird auf die Herstellung eines Formwerkzeuges verzichtet und zunächst die komplementäre Mikrostruktur mittels der Röntgentiefenlithographie hergestellt. Hierzu werden röntgenempfindliche Resistmaterialien eingesetzt, die sich durch große Stabilität und geringe Abnutzung auszeichnen. Nachem diese komplementäre Mikrostruktur ausgebildet ist, wird diese mittels Galvanoformung abgeformt. Die endgültige Mikrostruktur, die außer den Elektroden auch die Leiterbahnen und gegebenenfalls Wandteile umfassen kann, wird somit direkt aus Metall gefertigt, so daß sich z.B. eine leitfähige Beschichtung erübrigt.

Beispielhafte Ausführungsformen der Erfindung werden nachfolgend anhand der Zeichnungen näher erläutert.

Es zeigen:
- Figur 1: die perspektivische Darstellung einer elektrostatischen Pumpe ohne Pumpengehäuse gemäß einer ersten Ausführungsform,
- Figur 2: die Draufsicht auf die in Figur 1 gezeigte mikrominiaturisierte elektrostatische Pumpe,
- Figur 2b, 2c: die Draufsicht auf eine Pumpe mit Stäben gemäß weiterer Ausführungsformen,
- Figur 3: einen Schnitt durch eine Pumpe gemäß einer weiteren Ausführungsform,
- Figur 4a: den Schnitt durch eine Pumpe gemäß einer weiteren Ausführungsform,
- Figur 4b: den Schnitt durch die in Figur 4a gezeigte Pumpe längs der Linie A-A,
- Figur 5a - 5f: Verfahrensschritte zur Herstellung eines Formwerkzeuges
- Figuren 6a, 6b: Verfahrensschritte zur Herstellung einer Pumpe gemäß einer ersten Ausführungsform,
- Figuren 7a, 7b: Verfahrensschritte zur Herstellung einer Pumpe gemäß einer weiteren Ausführungsform,
- Figuren 8a - 8d: Verfahrensschritte, die sich an den in Figur 7b gezeigten Verfahrensschritt anschließen,
- Figur 9, 10a, 10b, 11a, 11b: Verfahrensschritte zur Herstellung einer Pumpe gemäß einer weiteren Ausführungsform,
- Figur 12: den Querschnitt durch eine Pumpe gemäß einer weiteren Ausführungsform,
- Figuren 13a, b: Verfahrensschritte zur Herstellung einer Pumpe gemäß einer weiteren Ausführungsform und
- Figur 14: die Draufsicht auf ein Mikrofluidiksystem.

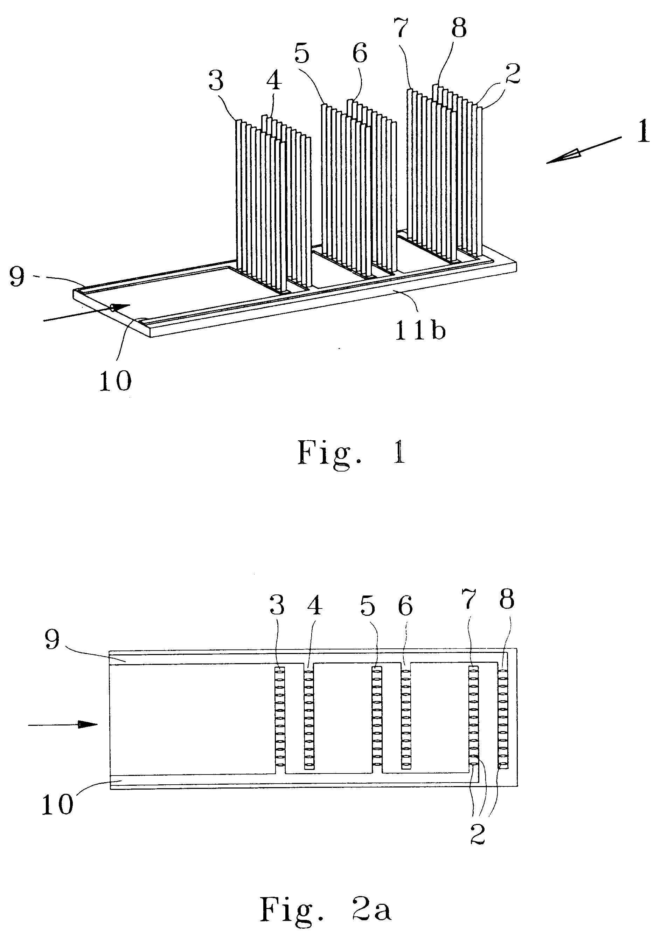

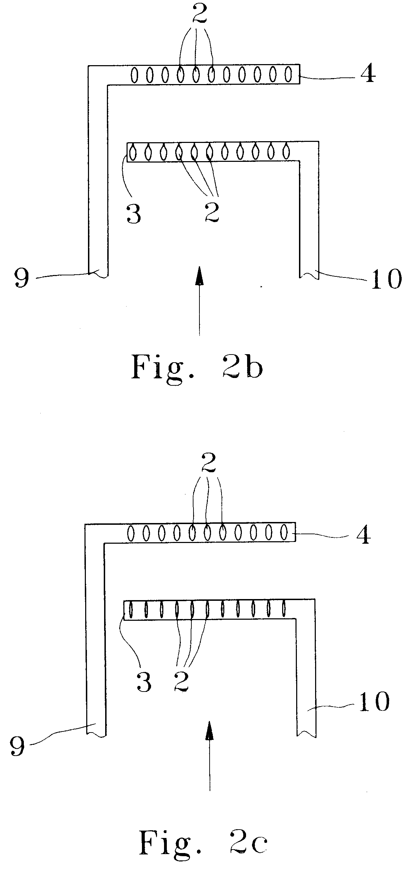

Die in Figur 1 gezeigte elektrostatische Pumpe 1 besteht im wesentlichen aus den einzelnen Stabreihen 3, 4, 5, 6, 7 und 8, von denen jeweils zwei benachbarte Stabreihen eine eigenständige Pumpeinheit bilden. Die einzelnen Stabreihen 3 bis 8 liegen auf unterschiedlichen Potentialen, wobei die Stabreihen 3 bis 8 an die Leiterbahnen 9 und 10 angeschlossen sind. Die Leiterbahnen 9 und 10 sind auf einem gemeinsamen Substrat 11b aufgebracht, das eine Wand der Pumpe dargestellt. Durch entsprechende Ausführung der Form der Stäbe 2 entstehen in den Gebieten großer Feldgradienten Ionen, die auch dort beschleunigt werden. In der hier gezeigten Ausführungsform besitzen die Stäbe 2 einen schneidenförmigen Querschnitt, wobei die Schneiden wie in Figur 2a zu sehen ist, einander zugewandt sind. Die Stäbe 2 sind entweder aus einem leitfähigen Kunststoff oder aus Metall gefertigt oder sie besitzen eine leitfähige Oberfläche.

In den Figuren 2b, 2c sind Beispiele weiterer Ausführungsformen der Stäbe 2 dargestellt. Die Stäbe 2 der unteren Stabreihe besitzen tropfenförmigen Querschnitt (Figur 2b) und sind bezüglich der Strömungsrichtung, die durch den Pfeil angedeutet ist, in der Weise ausgerichtet, daß die Schneiden stromabwärts auf Stäbe 2 mit ellipsenförmigen Querschnitt weisen. In der Figur 2c sind die Stäbe 2 der Stabreihe 3 mit jeweils zwei Schneiden versehen. Die Stäbe 2 der Stabreihe 4 sind versetzt zu den Stäben 2 der Stabreihe 3 angeordnet und besitzen die gleiche Gestalt wie die Stäbe 2 der Stabreihe 4 in Figur 2b.

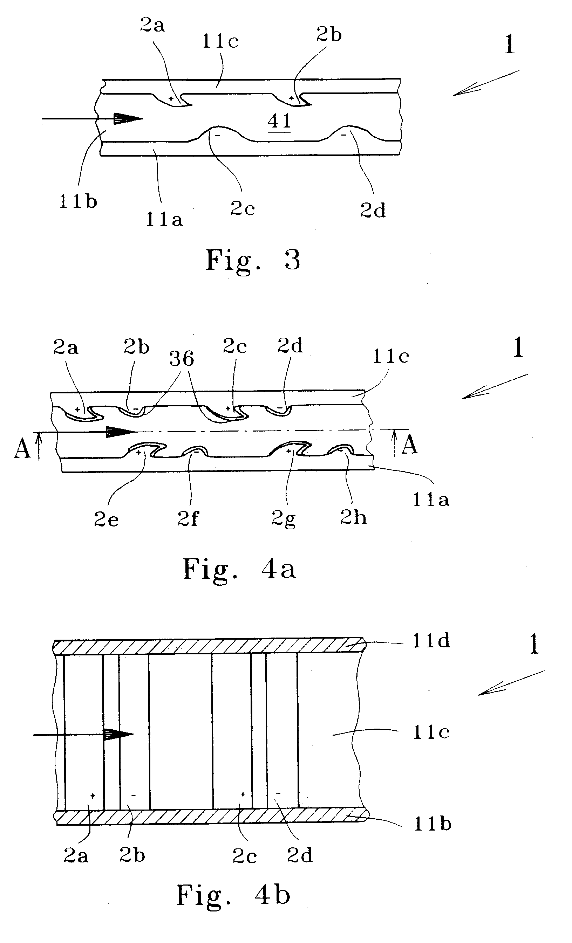

In der Figur 3 ist eine Pumpe 1 gemäß einer weiteren Ausführungsform zu sehen. Diese Pumpe besitzt vier Wände 11a, 11b, 11c, 11d, wovon die Wand 11d in dieser Figur nicht dargestellt ist. Die vier Wände 11a bis 11d umgrenzen eine rechteckige Pumpenkammer 41, durch die ein Medium in Pfeilrichtung gepumpt wird. Die Wände 11a und 11c sind mit Elektroden 2a bis 2d versehen. Die Elektroden 2a und 2b der Wand 11c sind flügelförmig ausgebildet und weisen mit ihren Flügelspitzen im wesentlichen auf die an der Wand 11a ausgebildeten Elektroden 2c bzw. 2d. Die Elektroden 2c, 2d sind zu den Elektroden 2a, 2b versetzt angeordnet, so daß zwischen den jeweils mit unterschiedlichem Potential beaufschlagten Elektroden 2a, 2c und 2b, 2d ein sich im wesentlichen in Strömungsrichtung ausgerichtetes elektrisches Feld aufbauen kann. Die Elektroden 2c, 2d sind in dieser Ausgestaltung im wesentlichen halbkreisförmig ausgebildet. Alle Elektroden 2a bis 2d sind rippenförmige Vorsprünge, die sich über die gesamte Breite der Pumpwände 11a bzw. 11c erstrecken. Die Pumpwände 11a, 11c können jeweils aus leitendem Material gefertigt sein, da alle Wandelektroden 2a, 2b bzw. 2c, 2d einer Wand auf dem gleichen Potential liegen.

In der Figur 4a ist eine weitere Ausführungsform einer Pumpe 1 im Schnitt dargestellt. Die Wände 11a und 11c sind wie in der Figur 3 mit Wandelektroden ausgestattet, wobei allerdings jede Wand sowohl flügelförmig ausgestaltete Elektroden 2a, 2c, 2e, 2g als auch halbkreisförmig ausgestaltete rippenförmige Vorsprünge 2b, 2d, 2f, 2h aufweist.

Die Elektroden einer Wand sind jeweils paarweise angeordnet. Die Elektroden 2a und 2c der Wand 11c liegen auf gleichem Potential (positives Potential), während die Elektroden 2b und 2d auf negativem Potential liegen. Zwischen den Elektroden 2a, 2b und zwischen den Elektroden 2c, 2d bildet sich jeweils ein elektrisches Feld aus, in dem die Ionen des zu pumpenden Mediums beschleunigt werden. Hierzu sind die Flügelspitzen der Elektroden 2a und 2c im wesentlichen auf die Elektroden 2b bzw. 2d ausgerichtet. Da die Elektroden 2a und 2b bzw. 2c und 2d auf unterschiedlichem Potential liegen, sind die Elektroden 2a bis 2d jeweils mit einer elektrisch leitenden Schicht 36 versehen, die mit den entsprechenden (nicht dargestellten) Leiterbahnen verbunden sind. Das gleiche gilt auch für die Elektroden 2e bis 2h der Wandplatte 11a. Hierbei sind die Elektroden 2e bis 2h jeweils versetzt zu den Elektroden 2a bis 2d angeordnet, damit die Elektroden nicht gegenüberliegen und somit zu einer zusätzlichen Verengung des Strömungsquerschnitts führen, was wiederum die Pumpleistung beeinträchtigen könnte.

In der Figur 4b ist ein Schnitt längs der Linie A-A der in Figur 4a gezeigten Pumpe 1 dargestellt. Die Wandelektroden 2a bis 2d, die in dieser Darstellung zu sehen sind, erstrecken sich über die gesamte Breite der Wand 11c.

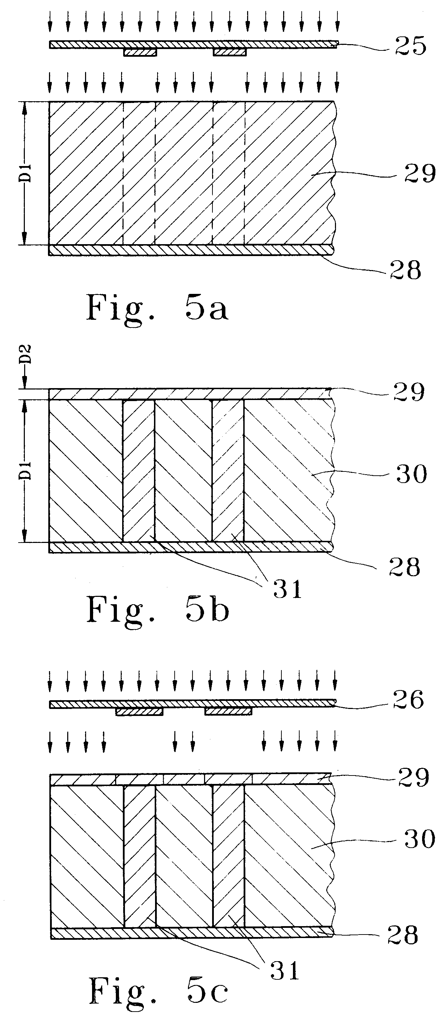

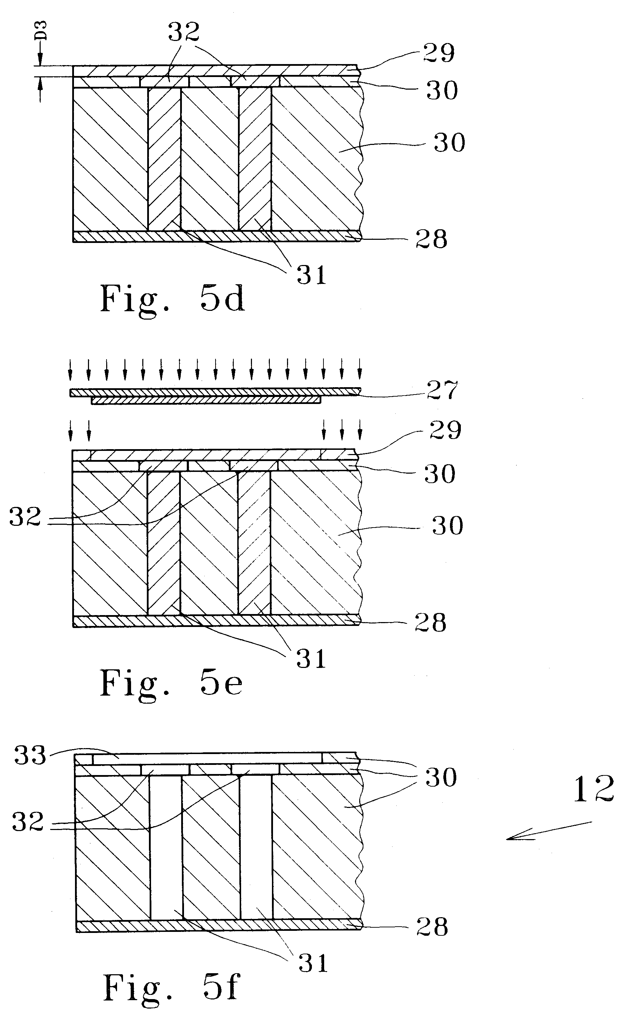

In den Figuren 5a bis 5f ist die Herstellung eines Formwerkzeuges 12 dargestellt. Auf eine Grundplatte 28 wird ein röntgenempfindliches Resistmaterial 29 mit einer Dicke D1 aufgebracht, die der Länge der auszubildenden Stabelektroden entspricht. Dieses Resistmaterial 29 wird unter Verwendung einer ersten Maske 25 mit Röntgenstrahlung (Pfeile) bestrahlt und entwickelt. Anschließend werden die belichteten Bereiche entfernt und galvanisiert. Das Metall 30 umschließt somit das noch vorhandene Resistmaterial, das die Stabstrukur 31 bildet. Nach einem weiteren Bearbeitungsschritt, gegebenenfalls Abfräsen der freien Oberfläche wird weiteres röntgenempfindliches Resistmaterial 29 mit der Dicke D2 aufgebracht. Unter Verwendung einer zweiten Maske 26, die die Leiterbahnenstruktur aufweist, wird nach einer notwendigen Justierung diese zweite Schicht mittels Röntgenstrahlen bestrahlt. Nach dem Entwickeln werden die herausgelösten Bereiche ebenfalls galvanisiert. Im letzten Schritt wird eine weitere Schicht aus röntgenempfindlichem Resistmaterial mit einer Dicke D3 aufgebracht, wobei die Dicke D3 der Dicke der auszubildenden Wand entspricht. Unter Verwendung einer dritten Maske 27 wird nach der notwendigen Justierung in dieser dritten Schicht die Wandstruktur 33 ausgebildet. Zum Schluß wird das im so ausgebildeten Formwerkzeug noch befindliche Resistmaterial entfernt, so daß das Formwerkzeug die Stabstruktur, die Leiterbahnstruktur und die Wandstruktur als Negativform aufweist.

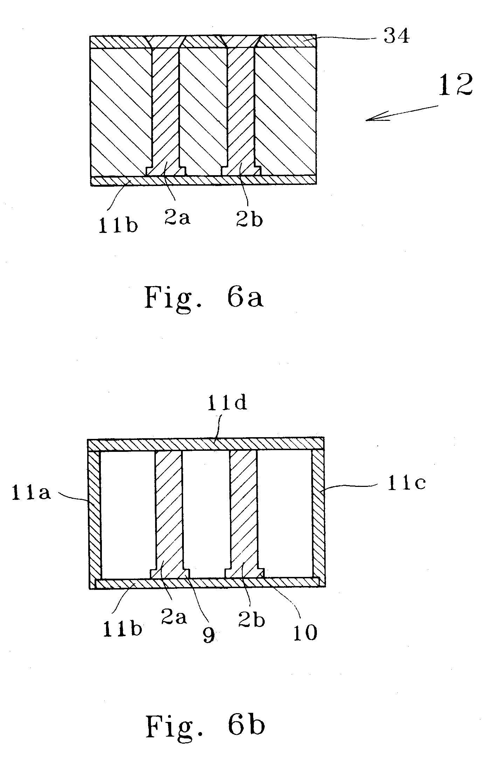

Unter Verwendung eines derart hergestellten Formwerkzeuges 12 kann nun eine Pumpe 1 angefertigt werden. Gemäß einer Verfahrensvariante, die in den Figuren 6a und 6b dargestellt ist, werden die Stabstruktur 31 und die Leiterbahnstruktur 32 - die Wandstruktur weist dieses Formwerkzeug 12 nicht auf - mit einem elektrisch leitfähigen Material im Spritzgußverfahren ausgefüllt. Der Anguß 34 wird durch Abfräsen entfernt. Somit werden auf der Wand 11b, c die Stabelektroden 2a und b nach Entfernen des Formwerkzeuges 12 ausgebildet. Zum Schluß wird ein Deckel mit den Wänden 11a, 11c und 11d auf die Wand 11b zur Vervollständigung der Pumpe 1 aufgesetzt und miteinander verbunden.

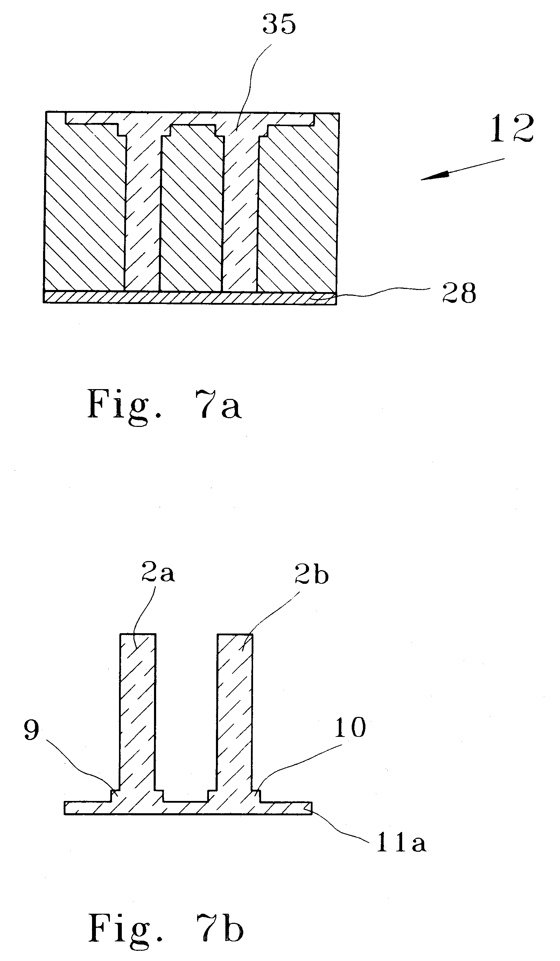

In der Figur 7a und der Figur 7b ist ein weiteres Verfahren dargestellt. Das Formwerkzeug 12, bei dem die Grundplatte 28 belassen wurde, und das die Stabstruktur 31, die Leiterbahnstruktur 32 und die Wandstruktur 33 aufweist, wird mit einem nicht leitenden Material im Spritzgußverfahren gefüllt. Nach Entfernen des Formwerkzeuges liegt die Wand 11a mit den Leiterbahnen 9 und 10 sowie den Elektroden 2a und 2b vor, die allerdings in weiteren Verfahrensschritten noch mit elektrisch leitendemb Material beschichtet werden müssen.

Wie in der Figur 8a zu sehen ist, wird die Wandplatte 11b, die nicht metallisiert werden soll, mit einer Schablone oder mit einem lichtempfindlichem Lack 37, der entsprechend der Leiterbahnanordnung in einem fotolithographischen Zwischenschritt strukturiert wird, bedeckt und die zu metallisierende Oberfläche mit Säure vorbehandelt. Im Tauchverfahren können dann Palladiumkeime aufgebracht und anschließend galvanisch Metall abgeschieden oder die freien Oberflächen werden durch Plasmabehandlung metallisiert.

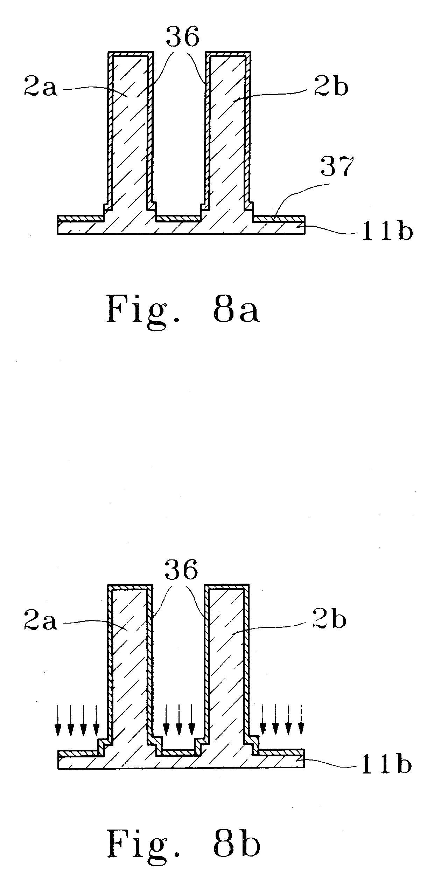

In dem in Figur 8b dargestellten Verfahrensschritt wird zunächst die gesamte freie Oberfläche mit einer Metallschicht 36 versehen und nach dem Metallisieren werden die Leiterbahnen auf der Bodenplatte durch Ablation und/oder Erhitzung mit einem Laser- oder Ionenstrahl getrennt, so daß die elektrische Funktionsweise der Pumpe realisiert wird.

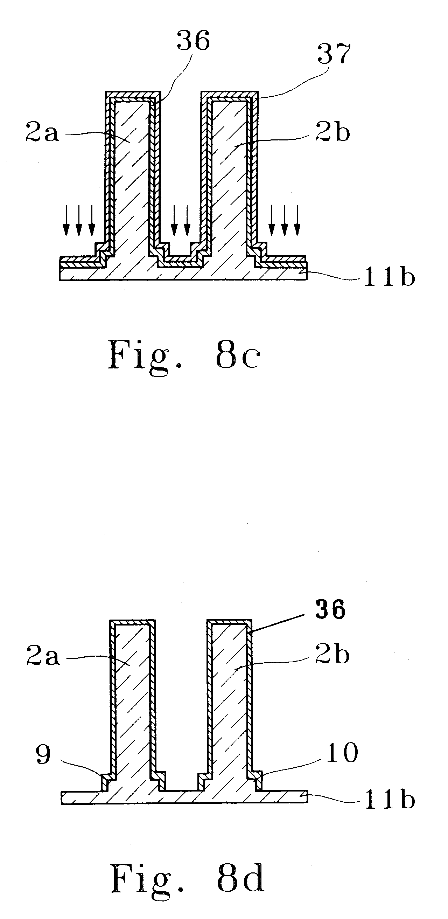

Eine weitere Methode der Trennung ist die vollständige Beschichtung mit lichtempfindlichem Lack 37 nach vollständiger Metallisierung, wie in der Figur 8c dargestellt ist. Die zu entfernenden Flächen werden belichtet und entwickelt. Danach liegen die zu entfernenden metallischen Oberflächen frei, die in einem weiteren Schritt abgeätzt werden. Zum Schluß wird der Lack 37 an den Elektroden 2a, 2b sowie den Leiterbahnen 9 und 10 entfernt. Dies ist in der Figur 8d dargestellt.

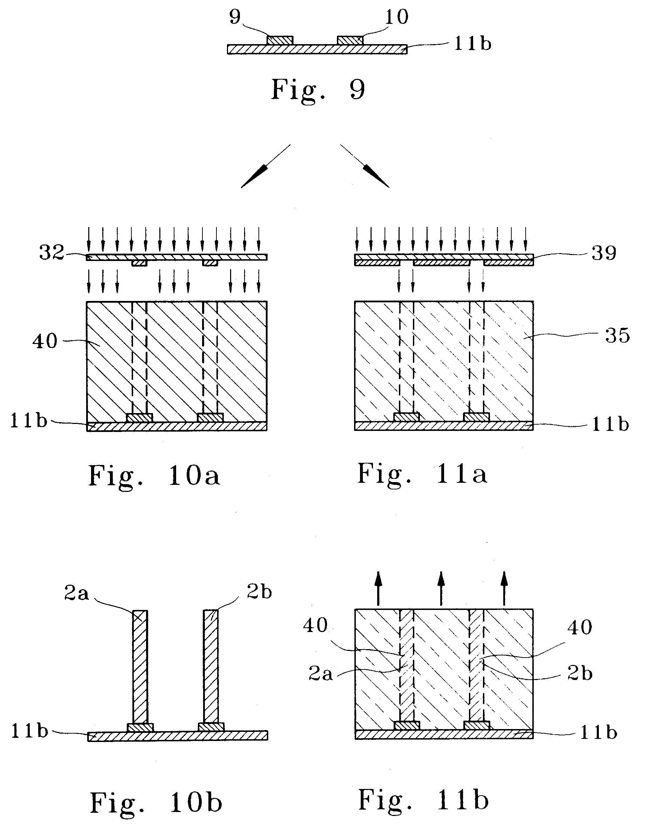

Ein anderes Verfahren zeigen die Figuren 9 bis 11b. Ausgehend von einer Wand 11b mit den Leiterbahnen 9 und 10 wird zunächst gemäß der Figur 10a ein elektrisch leitendes Resistmaterial mit einer Dicke aufgebracht, die der Länge der auszubildenden Stabelektroden entspricht. Mittels einer Maske 38 wird eine Bestrahlung mit Röntgenstrahlen vorgenommen, so daß die Mikrostruktur der Stabelektroden 2a, 2b ausgebildet wird. Wie in der Figur 10b zu sehen ist, wurde mittels der Tiefenlithographie die Stabanordnung im Resistmaterial erzeugt. Die Leitfähigkeit wird durch Zugabe von Kohlenstoff in Form von Graphit oder auch durch Flocken oder Kolloiden von Metallen niedriger Kernladungszahl erreicht. Im letzten Schritt werden entweder die Seitenwände durch einen weiteren Belichtungsschritt geschaffen und die Deckplatte angebracht oder eine im Spritzguß hergestelltes Formstück, das Seitenwände und Deckenplatte enthält, wird aufgeklebt oder verschweißt.

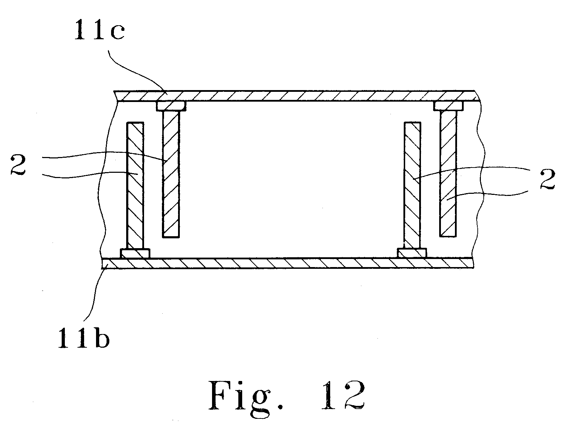

Gemäß der Figur 11a wird auf die Wand 11b ein elektrisch leitendes, röntgenempfindliches Resistmaterial 35 mit einer Dicke aufgebracht, die der Länge der auszubildenden Stabelektroden entspricht. Mittels einer Maske 39 wird die Anordnung der Stabelektroden komplementär zur Darstellung der Figur 10a ausgebildet. Nach Entfernen des nicht leitenden Resistmaterials werden die Freiräume mit elektrisch leitendem Material 40 ausgefüllt und das überschüssige Resistmaterial 35 entfernt.

Gemäß der Figur 12 ist ein Teil der Stabelektroden 2 an der Wand 11b und ein anderer Teil der Stabelektroden 2 an der Wand 11d angeordnet. Mit Justieranschlägen, die bei der Fertigung erzeugt werden, wird bei der Montage der notwendige Abstand der Stabreihen eingehalten. Für Unter- und Oberteil kommen entweder leitfähige oder auch nicht leitfähige Kunststoffe, die in gleicher Weise wie oben beschrieben, metallisiert werden, zur Anwendung. Bei der Montage werden die Unter- und Oberteile mit den nicht leitfähigen Seitenwänden verbunden.

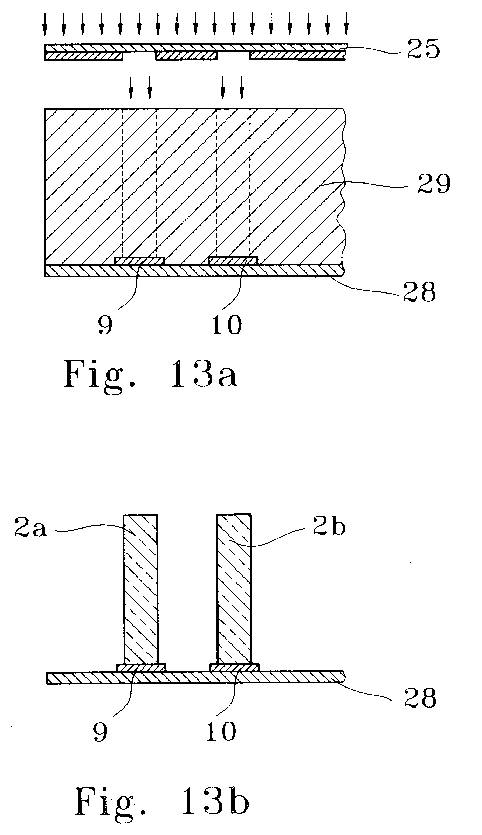

In den Figuren 13a, b ist die Herstellung einer Pumpe dargestellt, bei der kein Formwerkzeug benötigt wird. Auf eine Grundplatte 28, auf der bereits die Leiterbahnen 9, 10 aufgebracht sind, wird ein röntgenempfindliches Resistmaterial 29 aufgetragen, dessen Dicke der Länge der auszubildenden Elektroden entspricht. Das Resistmaterial wird unter Verwendung einer Maske 25, die die komplementäre Struktur der auszubildenden Elektroden aufweist, mit Röntgenstrahlung (s. Pfeile) bestrahlt und entwickelt. Anschließend werden die belichteten Bereiche entfernt und in einem zweiten Schritt, der in der Figur 13b dargestellt ist, mittels Galvanoformung abgeformt. Bei diesem Schritt werden die freien Bereiche, die die Elektroden darstellen, mit Metall ausgefüllt und anschließend das die Form bildende Resistmaterial entfernt. Die aus Resistmaterial bestehende Form kann ggf. zur Herstellung weiterer Mikrostrukturen auf dem Wege der Galvanoformung eingesetzt werden.

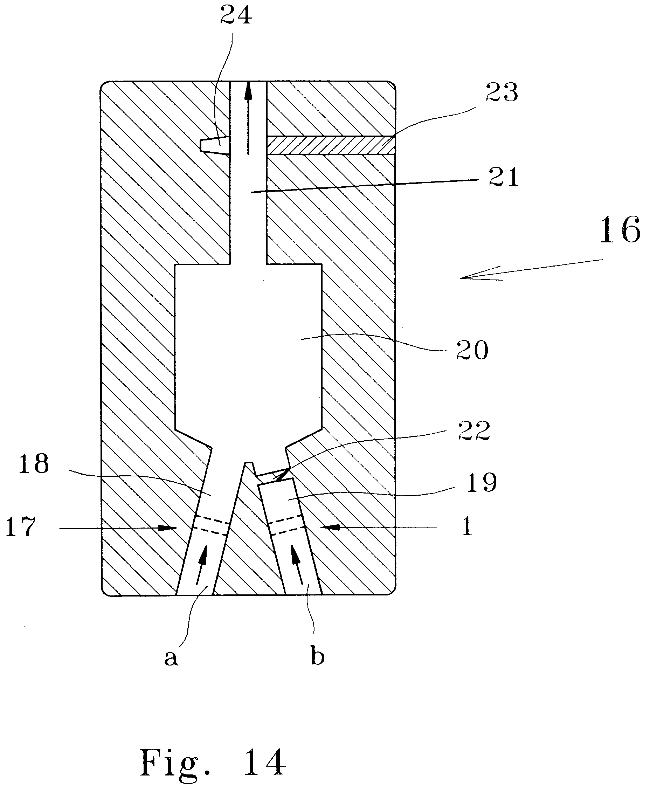

In der Figur 14 ist in einem Beispiel die Integrationsfähigkeit der Pumpe in ein einfaches Mikrosystem dargestellt. Es handelt sich bei diesem Mikrosystem 16 um ein System zur automatischen Analyse von Flüssigkeitsinhalten. Das Mikrosystem 16 besitzt zwei Einlaßkanäle 18 und 19 für das Einleiten zweier Flüssigkeiten a und b, eine Mischkammer 20 und einen Auslaßkanal 21 für die Flüssigkeitsmischung. Im Einlaßkanal 18 wird die zu analysierende Flüssigkeit mit einer elektrodynamischen Pumpe 17 gefördert. Soll die Flüssigkeit a analysiert werden, erzeugt die erfindungsgemäße elektrostatische Pumpe 1 einen präzise dosierbaren Flüssigkeitsstrom der Flüssigkeit b, der das Klappenventil 22 aufdrückt und Analysemittel mit der zu untersuchenden Flüssigkeit a im Mischraum 20 vermengt und z.B. eine Farbreaktion erzeugt. Die Messung der Extinktion kann mittels einer Lichtdiode und eines Lichtleiters 23 im Auslaßkanal 21 erfolgen. Somit ergibt sich eine Aussage bezüglich der zu bestimmenden Konzentration in der zu untersuchenden Flüssigkeit a. Die Ausbildung der Kanäle 18 und 19 sowie der Pumpen 17 und der Mischkammer 20 und des Auslaßkanals 21 mit der Wellenleiterstruktur 23 kann in einem einzigen Abformschritt hergestellt werden. Hierzu wird ein Formwerkzeug mittels Röntgentiefenlithographie und Galvanoformung hergestellt, das alle Strukturen einschließlich der elektrostatischen Pumpe 1 aufweist.

### Bezugszeichenliste

- 1: Pumpe
- 2, 2a, b, c, d, e, f, g, h: Elektroden
- 3-8: Elektrodenreihen
- 9: Leiterbahn
- 10: Leiterbahn
- 11a, b, c, d: Substrat, Pumpenwand
- 12: Formwerkzeug
- 16: Mikroströmungsstruk- tur
- 17: Elektrodynamische Pumpe
- 18: Einlaßkanal
- 19: Einlaßkanal
- 20: Mischkammer
- 21: Auslaßkanal
- 22: Klappenventil
- 23: Lichtleiter
- 24: Lichtdiode
- 25: Maske
- 26: Maske
- 27: Maske
- 28: Grundplatte
- 29: röntgenempfindliches Resistmaterial
- 30: Metall
- 31: Stabstruktur
- 32: Leiterbahnstruktur
- 33: Wandstruktur
- 34: Anguß
- 35: nicht leitendes Material
- 36: elektrisch leitende Schicht
- 37: Lack
- 38: Maske
- 39: Maske
- 40: elektrisch leitendes Material

## Patentansprüche

1. Mikrominiaturisierte elektrostatische Pumpe mit in einem zu pumpenden, im wesentlichen nicht leitenden Medium angeordneter Elektroden, die mit einem Potential zum Beschleunigen oder zum Induzieren und Beschleunigen eines zwischen den Elektroden durch das Medium fließenden Ionenstromes beaufschlagbar sind, dadurch gekennzeichnet,
daß die Elektroden (2) aus mindestens zwei in Strömungsrichtung hintereinander angeordneter mit unterschiedlichem Potential beaufschlagter Reihen (3 bis 8) von Stäben bestehen, die auf einem elektrische Leiterbahnen (9, 10) aufweisenden Wandteil (11) gemeinsam aufgebracht sind und die senkrecht zur Strömungsrichtung und senkrecht zum Wandteil (11) ausgerichtet sind.

2. Pumpe nach Anspruch 1, dadurch gekennzeichnet, daß der Abstand der Stäbe (2) einer Reihe (3 bis 8) und/oder der Abstand zweier Stabreihen (3 bis 8) < 25 Mikrometer beträgt.

3. Pumpe nach einem der Ansprüche 1 oder 2 gekennzeichnet, daß das Verhältnis von Länge zur Querschnittsabmessung der Stäbe (2) > 50 ist.

4. Pumpe nach einem der Ansprüche 1 bis 3, dadurch gekennzeichnet, daß die Stäbe (2) zumindest einseitig die Gestalt einer Schneide aufweisen, wobei die Schneiden in Strömungsrichtung auf abgerundete Flächen benachbarter Stabreihen (3 bis 8) weisen.

5. Mikrominiaturisierte elektrostatische Pumpe mit in einem zu pumpenden, im wesentlichen nicht leitenden Medium angeordneter Elektroden, die mit einem Potential zum Beschleunigen oder Induzieren und Beschleunigen eines zwischen den Elektroden durch das Medium fließenden Ionenstromes beaufschlagbar sind, dadurch gekennzeichnet, daß die Elektroden (2a bis 2h) einen integralen Bestandteil mindestens einer ebenen Pumpenwand (11, 11a bis 11d) bilden und als in den Pumpenraum (41) hineinragende, sich entlang der Pumpenwand senkrecht zur Strömungsrichtung erstreckende, rippenförmige Vorsprünge (2a bis 2h) ausgebildet sind.

6. Pumpe nach Anspruch 5, dadurch gekennzeichnet, daß die rippenförmigen Vorsprünge (2a, 2b) einer Wand (11c) versetzt zu den rippenförmigen Vorsprüngen (2c, 2d) einer anderen Wand (11a) angeordnet sind.

7. Pumpe nach einem der Ansprüche 5 oder 6, dadurch gekennzeichnet, daß ein Teil der rippenförmigen Vorsprünge (2a bis 2h) stromabwärts eine Hinterschneidung aufweist, wobei Vorsprünge (2a bis 2h) die Gestalt eines Flügels aufweisen, und das jeweilige Flügelende im wesentlichen auf eine stromabwärts benachbarte Elektrode ausgerichtet ist.

8. Pumpe nach einem der Ansprüche 1 bis 7, dadurch gekennzeichnet, daß die Elektroden (2) aus elektrisch leitfähigen Polymeren bestehen.

9. Pumpe nach einem der Ansprüche 1 bis 7, dadurch gekennzeichnet, daß zumindest die Elektroden (2) mit einer leitfähigen Beschichtung versehen sind.

10. Verfahren zur Herstellung einer mirko-miniaturisierten, elektrostatischen Pumpe, mit eine räumliche Mikrostruktur bildenden Elektroden, dadurch gekennzeichnet,
daß zumindest die Mikrostruktur hinsichtlich Gestalt und gegenseitiger Anordnung der Elektroden unter Einsatz der Röntgentiefenlithographie ausgebildet wird.

11. Verfahren nach Anspruch 10, dadurch gekennzeichnet, daß zunächst mittels Röntgentiefenlithographie und Galvanoformung ein Formwerkzeug hergestellt wird, das mindestens die Mikrostruktur der Elektroden und die Struktur der zu den Elektroden führenden Leiterbahnen aufweist, und
daß das Formwerkzeug auf eine Wandplatte aufgesetzt und mit einem leitfähigen Material abgeformt wird.

12. Verfahren nach Anspruch 10, dadurch gekennzeichnet, daß zunächst mittels Röntgentiefenlithographie und Galvanoformung ein Formwerkzeug hergestellt wird, das zumindest die Mikrostruktur der Elektroden, die Struktur der zu den Elektroden führenden Leiterbahnen sowie ein Wandteil der Pumpe aufweist,
daß das Formwerkzeug mit einem nicht leitenden Material abgeformt wird und
daß anschließend die Elektroden und die Leiterbahnen mit einer elektrisch leitenden Schicht versehen werden.

13. Verfahren nach einem der Ansprüche 10 bis 12, dadurch gekennzeichnet, daß zur Herstellung des Formwerkzeuges eine Grundplatte mit röntgenempfindlichem Resistmaterial in aufeinanderfolgenden Schritten in festgelegten Dicken (D1 bis D3) beschichtet wird, und
daß nach jedem Beschichtungsvorgang das aufgebrachte Resistmaterial selektiv mit Röntgenstrahlen bestrahlt, entwickelt und galvanisiert wird.

14. Verfahren nach Anspruch 13, dadurch gekennzeichnet, daß drei aufeinanderfolgende Schritte zur Ausbildung einer Stabstruktur, einer Leiterbahnstruktur und einer Wandteilstruktur durchgeführt werden.

15. Verfahren nach einem der Ansprüche 13 oder 14, dadurch gekennzeichnet, daß nach dem Galvanisieren die jeweils freie Oberfläche auf die festgelegte Dicke D1, D2, D3 abgefräst wird.

16. Verfahren nach Anspruch 10, dadurch gekennzeichnet, daß zur Herstellung des Formwerkzeuges mehrere Metallplatten mittels der Röntgentiefenlithographie hergestellt werden, wobei jede Platte eine Struktur der Mikropumpe aufweist und daß anschließend die Metallplatten paßgenau miteinander verbunden werden.

17. Verfahren nach einem der Ansprüche 10 bis 16, dadurch gekennzeichnet, daß nach dem Abformen die Bodenplatte, die nicht mit einer elektrisch leitenden Schicht versehen werden soll, mit einem lichtempfindlichen Lack bedeckt wird und dieser Lack entsprechend der Leiterbahnanordnung in einem fotolithographischen Zwischenschritt strukturiert wird, und
daß anschließend die mit der elektrisch leitenden Schicht zu versehenden freien Oberflächen mit einer Säure vorbehandelt und danach mit einer elektrischen leitenden Schicht versehen werden.

18. Verfahren nach Anspruch 17, dadurch gekennzeichnet, daß nach dem Abformen des Formwerkzeuges die gesamte freie Oberfläche mit einer elektrisch leitenden Schicht versehen wird, diese Schicht mit einem lichtempfindlichem Lack bedeckt wird und die zu entfernenden Flächen belichtet, entwickelt und entfernt werden und daß die so freigelegte leitende Schicht abgeätzt und anschließend der restliche Lack entfernt wird.

19. Verfahren nach Anspruch 10, dadurch gekennzeichnet, daß auf einer mit Leiterbahnen versehenen Bodenplatte ein leitfähiges, röntgenempfindliches Resistmaterial aufgebracht wird und
daß mittels der Röntgentiefenlithographie zumindest die Elektrodenstruktur aus dem Resistmaterial herausgearbeitet wird.

20. Verfahren nach Anspruch 10, dadurch gekennzeichnet, daß auf einer mit Leiterbahnen versehenen Bodenplatte ein nicht leitfähiges röntgenempfindliches Resistmaterial aufgebracht wird, daß mittels der Röntgentiefenlithographie zumindest die Elektrodenstruktur aus dem Resistmaterial herausgearbeitet wird und daß anschließend die die Elektroden bildenden Freiräume mit elektrisch leitendem Material ausgefüllt werden.

21. Verfahren nach Anspruch 10, dadurch gekennzeichnet, daß zunächst mittels der Röntgentiefenlithographie die komplementäre Mikrostruktur zunächst der Elektroden hergestellt wird und daß anschließend die komplementäre Mikrostruktur mittels Galvanoformung zur Ausbildung der endgültigen Struktur abgeformt wird.
